(19) Europäisches Patentamt
European Patent Office
Office européen des brevets

(11) **EP 1 529 658 B1**

(12) **EUROPEAN PATENT SPECIFICATION**

(45) Date of publication and mention
of the grant of the patent:
**14.01.2009 Bulletin 2009/03**

(51) Int Cl.:
***B60C 11/03*** *(2006.01)*

(21) Application number: **04025999.6**

(22) Date of filing: **03.11.2004**

(54) **Pneumatic tire**

Luftreifen

Bandage pneumatique

(84) Designated Contracting States:
**DE FR**

(30) Priority: **04.11.2003 JP 2003373965**

(43) Date of publication of application:
**11.05.2005 Bulletin 2005/19**

(73) Proprietor: **THE YOKOHAMA RUBBER CO., LTD.**
**Tokyo (JP)**

(72) Inventor: **Iizuka, Hiroshi**
**2-1, Oiwake**
**Hiratsuka-shi**
**Kanagawa-ken (JP)**

(74) Representative: **HOFFMANN EITLE**
**Patent- und Rechtsanwälte**
**Arabellastrasse 4**
**81925 München (DE)**

(56) References cited:
**EP-A- 0 878 329          EP-A- 1 207 056**
**WO-A1-03/035413**

**Description**

BACKGROUND OF THE INVENTION

The present invention relates to pneumatic tires, and more particularly, to a pneumatic tire which can improve irregular wear. Such pneumatic tire is known from WO 03/035413, which is considered to be the most relevant prior art document.

In general, pneumatic tires used for vehicles such as buses and trucks employ a rib pattern having ribs defined by main grooves extending in a circumferential direction of the tire in a tread surface thereof. These pneumatic tires have a problem of irregular wear such as shoulder wear that the outer edge portions of ribs located in the opposite shoulder regions of the tread surface wear earlier, and railway wear that wear grows along the edge portions on one side of the ribs, especially the inner edge portions of the ribs located in the shoulder regions. The growth of such irregular wear develops polygonal wear, which encourages vibration of the tire.

Conventionally, to solve the above problem, a pneumatic tire is disclosed in Unexamined Japanese Patent Application Publication No. 8-85308, which includes ribs having a specified ground contact length to thereby improve irregular wear.

However, the pneumatic tire to be particularly mounted on a steering wheel does not have a sufficient effect of preventing railway wear and shoulder wear, and further improvement is desired.

SUMMARY OF THE INVENTION

The present invention relates to a pneumatic tire having a tread surface comprising four main grooves extending in a circumferential direction of the tire, the four main grooves consisting of two inner main grooves disposed on both sides of an equatorial plane of the tire and two outer main grooves disposed outwardly of the two inner main grooves, three land portions extending in the tire circumferential direction being formed in a center region located between the two outer main grooves, a land portion extending in the tire circumferential direction being formed in each of shoulder regions located outwardly of the two outer main grooves; and wherein the following relationships are fulfilled when the tread surface contacts with a ground:

$$0.80 \leq B/A \leq 0.95$$

$$0.90 \leq C/B \leq 1.00$$

where A is the ground contact length of the central land portion of the three land portions in the center region, B is the ground contact length of the outer edge of the land portion in the shoulder region and C is the ground contact length of the inner edge of the land portion in the shoulder region; a ground contact length D of the outer edge of each of the land portions on both sides of the central land portion in the center region is equal to or shorter than a ground contact length E of the inner edge thereof; and the ground contact length E of the inner edge of each of the land portions on both sides in the center region is equal to or less than the ground contact length A of the central land portion, and is equal to or greater than the ground contact length B of the outer edge of the land portion in the shoulder region.

BRIEF DESCRIPTION OF THE DRAWINGS

For a better understanding of the present invention and to show how the same may be carried into effect, reference will now be made, by way of example to the accompanying drawings, in which:

FIG. 1 is a partial development view of a tread surface showing an embodiment of a pneumatic tire according to the present invention;
FIG. 2 is a view for schematically illustrating a ground contact shape of the tread surface of an embodiment of the pneumatic tire of the present invention;
FIG. 3 is a view for schematically illustrating a ground contact shape of a tread surface of an embodiment where ribs in the shoulder regions have ground contact lengths longer than those in the center side;
FIG. 4 is a view for schematically illustrating a ground contact shape of a tread surface of an embodiment where ribs in the shoulder regions have ground contact lengths shorter than those in the center side;
FIG. 5 is a view for schematically illustrating a ground contact shape of a tread surface of an embodiment where the ground contact length of the inner edge of each rib in the shoulder region is longer than that of the outer edge thereof, and where the ground contact length of the outer edge of each of ribs on both sides in the center region is longer than that of the inner edge thereof; and

FIG. 6 is a view for schematically illustrating a ground contact shape of a tread surface of an embodiment where the ground contact length of the inner edge of each rib in the shoulder region is shorter than that of the outer edge thereof, and where the ground contact length of the outer edge of each of ribs on both sides in the center region is shorter than that of the inner edge thereof.

DESCRIPTION OF THE PREFERRED EMBODIMENT

The embodiment of the present invention will be described in detail below with reference to the drawings.

Described is a pneumatic tire in which both railway wear and shoulder wear can effectively be suppressed.

A pneumatic tire according to an embodiment of the present invention includes a tread surface having fourmain grooves extending in a circumferential direction of the tire, the four main grooves consisting of two inner main grooves disposed on both sides of an equatorial plane of the tire and two outer main grooves disposed outwardly of the two inner main grooves, three land portions extending in the tire circumferential direction being formed in a center region located between the two outer main grooves, a land portion extending in the tire circumferential direction being formed in each of shoulder regions located outwardly of the two outermain grooves, wherein the following relationships are fulfilled when the tread surface contacts with a ground:

$$0.80 \leqq B/A \leqq 0.95$$

$$0.90 \leqq C/B \leqq 1.00$$

where A is the ground contact length of the central land portion of the three land portions in the center region, B is the ground contact length of the outer edge of the land portion in the shoulder region and C is the ground contact length of the inner edge of the land portion in the shoulder region.

According to the embodiment described above, the ground contact length A of the center land portion in the center region, and the ground contact length B of the outer edge and the ground contact length C of the inner edge of the land portion in the shoulder region have relationships specified as described above to thereby make the ground contact shape of the tread surface optimal for suppression of shoulder wear and railway wear created on the ribs in the shoulder regions, which allows for effective suppression of occurrence of the two wears. Therefore, railway wear resistance as well as shoulder wear resistance can be enhanced.

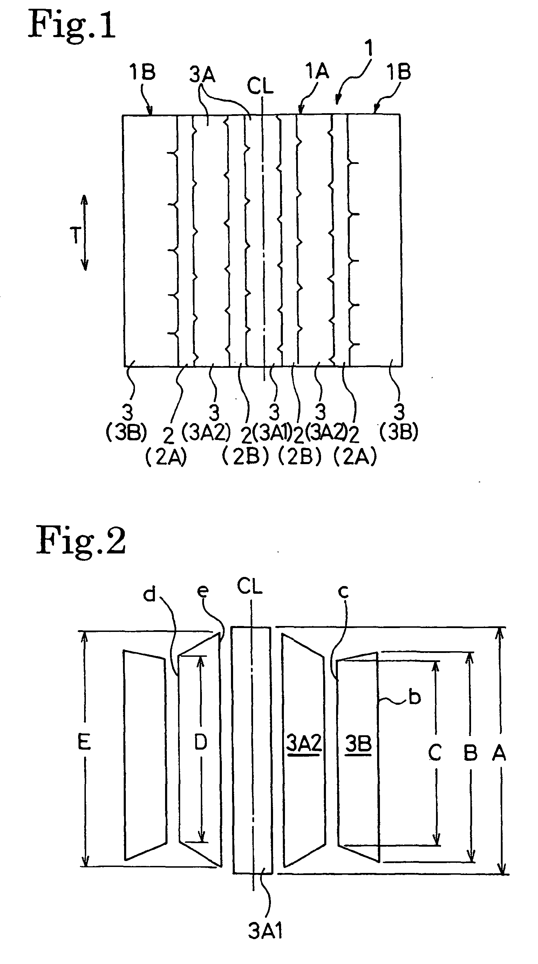

Referring to Fig. 1, there is shown an embodiment of a pneumatic tire according to the present invention. A tread surface 1 has four main grooves 2 extending straight along a circumferential direction T of the tire. The four main grooves 2 include two inner main grooves 2B placed on both sides of an equatorial plane CL of the tire, and two outer main grooves 2A placed outwardly of the two inner main grooves 2B, and are symmetrically located with respect to the tire equatorial plane CL. These four main grooves 2 defines five ribs (land portions) 3 extending in the tire circumferential direction T in the tread surface 1.

Three ribs 3A are disposed in a center region 1A of the tread surface 1 located between the two outer main grooves 2A. The central rib 3A1 thereof is disposed on the tire equatorial plane CL, and the ribs 3A2 on both sides of the central rib are symmetrically placed with respect to the tire equatorial plane CL. One rib 3B is provided in each of two shoulder regions 1B located outwardly of the two outer main grooves 2A.

As shown in FIG. 2, when the tread surface 1 engages a road surface, the central rib 3A1 in the center region 1A and the ribs 3A in the shoulder regions 1B satisfy the following relationships:

$$0.80 \leqq B/A \leqq 0.95$$

$$0.90 \leqq C/B \leqq 1.00$$

where A is the ground contact length in millimeters of the central rib 3A1 on the tire equatorial plane CL, B is the ground contact length in millimeters of the outer edge b of the rib 3B and C is the ground contact length in millimeters of the inner edge c of the rib 3B

The ground contact length D in millimeters of the outer edge d of each of the ribs 3A2 on both sides in the center region 1A is equal to or shorter than the ground contact length E in millimeters of the inner edge e thereof. The ground contact length E of the inner edge e is equal to or shorter than the ground contact length A of the central rib 3A1, and is equal to or longer than the ground contact length B of the outer edge b of the rib 3B in the shoulder region 1B. The ground contact length D of the outer edge d of the rib 3A2 is equal to or longer than the ground contact length C of the inner edge c of the rib 3B.

The term "ground contact length of the rib" as used herein is the ground contact length of the rib measured when a tire contacts with a ground (road surface) under conditions such that the tire is mounted on a standard rim described in JATMA (JATMA YEAR BOOK 2003) and an air pressure and a load corresponding to the maximum load ability described therein are applied thereto.

The aforementioned ground contact shape (footprint) can be obtained, for example, by making the curvature radius of the center region 1A of the tread surface 1 properly greater than that of the shoulder region 1B, or by properly adjusting the groove wall angles of the main grooves 2.

The present inventor has found the following fact through an intense study about railway wear and shoulder wear which were problematic with heavy duty pneumatic tires to be mounted on a steering wheel, having a tread surface with the four main grooves.

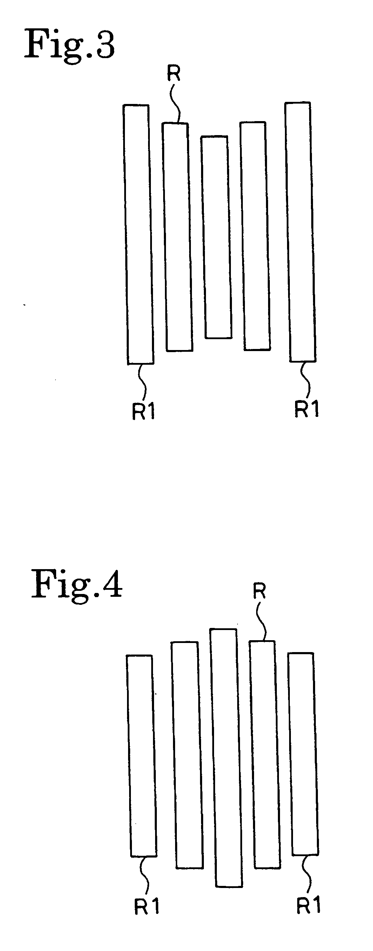

It turned out that, as shown in FIG. 3, when the ground contact shape of a tread surface having five ribs R defined by the four main grooves was formed such that ribs R1 in the shoulder regions had ground contact lengths longer than those of the ribs in the center side, a high tendency to create shoulder wear was shown, and that, as shown in FIG. 4, when the ground contact shape of the tread surface was formed such that ribs R1 in the shoulder regions had ground contact lengths shorter than those of the ribs in the center side, a low tendency to create shoulder wear was shown.

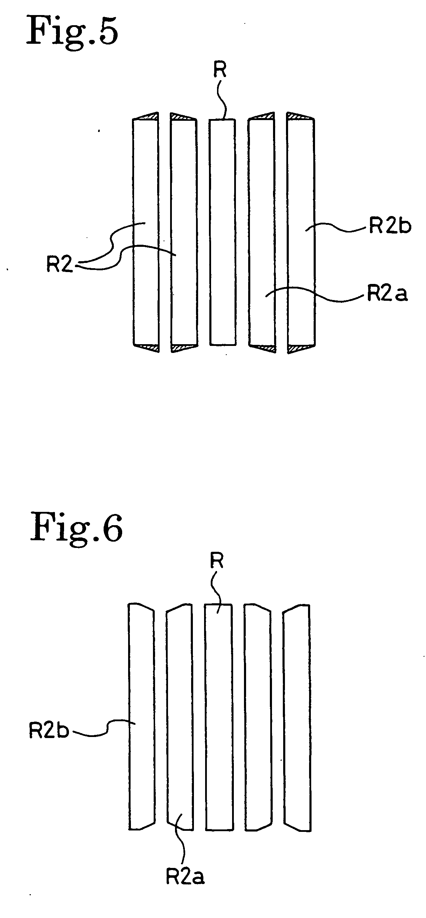

Also, it turned out that, as shown in FIG. 5, when the ground contact length of the inner edge of a rib R2b in the shoulder region was longer than the ground contact length of the outer edge thereof, railway wear occurred in a shaded section of the rib R2b, and when the ground contact length of the outer edge of a rib R2a in the center region was longer than the ground contact length of the inner edge thereof, railway wear occurred in a shaded section of the rib R2a.

Further, it turned out that, as shown in FIG. 6, when the ground contact length of the inner edge of a rib R2b in the shoulder region was shorter than the ground contact length of the outer edge thereof, the rib R2b had a low tendency to create railway wear, and when the ground contact length of the outer edge of a rib R2a in the center region was shorter than the ground contact length of the inner edge thereof, the rib R2a had a low tendency to create railway wear.

Therefore, in the present invention, the relationships between the ground contact lengths of the ribs 3 defined by the four main grooves 2 are specified as described above. Formation of the ground contact shape having the relationships, specified as mentioned above, between the ground contact length A of the central rib 3A1 located on the tire equatorial plane CL in the center region 1A, and the ground contact lengths B and C of each of the ribs 3B located in the shoulder regions 1B, allows the ground contact shape of the tread surface 1 to be optimized for restriction of shoulder wear and railway wear created on the ribs 3B in the shoulder regions 1B to thereby effectively suppress occurrence of the two wears. Accordingly, railway wear as well as shoulder wear can be improved.

If the ratio B/A is less than 0.80, it is not preferable because the central rib 3A1 is susceptible to occurrence of irregular wear called rib punch. If the ratio B/A is greater than 0. 95, it is difficult to effectively suppress shoulder wear.

If the ratio C/B is less than 0. 9, or is greater than 1. 00, railway wear can not effectively be suppressed.

The ground contact lengths D and E of each of the ribs 3A2 on both sides in the center region 1A are specified as described above, railway wear created along the outer edge d of each of the ribs 3A2 can effectively be suppressed without creating a problem of other irregular wear.

In particular, the described embodiments preferably applicable to heavy duty pneumatic tires to be mounted on a steering wheel, but is not limited thereto.

EXAMPLE

Prepared, respectively, were tires 1 to 5 according to the present invention, comparative tires 1 and 2 and a conventional tire having a tire size of 295/75R22.5 and an arrangement shown in FIG. 1, each tire except the conventional tire having the ratio B/A of the ground contact length B of the outer edge of the rib in the shoulder region to the ground contact length A of the central rib in the center region, and the ratio C/B of the ground contact length C of the inner edge of the rib in the shoulder region to the ground contact length B of the outer edge thereof shown in Table 1, the conventional tire having ribs having the same ground contact length.

In the tires of the present invention and the comparative tires, the ground contact length D of the outer edge of each of the ribs on both sides in the center region, and the ground contact length E of the inner edge thereof had the following relationships:

$$D < E$$

$$E < A$$

$$E > B$$

$$D > C$$

Each test tire was mounted on a 8.25×22.5 sized rim, an air pressure of 760 kPa was applied thereto, and the resulting tire was attached to a truck with a load of 20 tons as a front wheel. Evaluation tests for shoulder wear and railway wear were conducted in accordance with the following test methods. The results shown in Table 1 were obtained.

Shoulder Wear

The wear amount of the central rib in the center region of each teat tire and the wear amount of the outer edge of each of the ribs in the shoulder regions thereof were measured after traveling of 60, 000 miles (96, 000 km) along a public road, and shoulder wear of each test tire was evaluated from the difference between the two wear amounts. The evaluation results of the test tires were represented by the index on the basis of the conventional tire as 100. The greater the index value is, the less the shoulder wear occurs and the better the shoulder wear resistance is.

Railway Wear

The wear amount of the inner edge of each of the ribs in the shoulder regions of each test tire was measured after the above traveling of 60, 000 miles (96, 000 km), and the evaluation results were represented by the index on the basis of the conventional tire as 100. The greater the index value is, the less the railway wear occurs and the better the railway wear resistance is.

Table 1

|  | B/A | C/B | Shoulder Wear | Railway Wear |
|---|---|---|---|---|
| Conventional Tire | - | - | 100 | 100 |
| Comparative Tire 1 | 1.00 | 1.05 | 105 | 90 |
| Present Invention Tire 1 | 0.95 | 1.00 | 110 | 105 |
| Present Invention Tire 2 | 0.90 | 0.95 | 115 | 110 |
| Present Invention Tire 3 | 0.85 | 0.90 | 120 | 115 |
| Present Invention Tire 4 | 0.80 | 0.90 | 125 | 120 |
| Comparative Tire 2 | 0.75 | 0.80 | rib punch | 125 |

As can be seen from Table 1, the tires according to the present invention can effectively suppress shoulder wear and railway wear, and improve shoulder wear resistance as well as railway wear resistance.

**Claims**

1. A pneumatic tire having a tread surface comprising four main grooves (2) extending in a circumferential direction of the tire, the four main grooves (2) consisting of two inner main grooves (2B) disposed on both sides of an equatorial plane of the tire and two outer main grooves (2A) disposed outwardly of the two inner main grooves (2B);
three land portions (3A1, 3A2) extending in the tire circumferential direction being formed in a center region located between the two outer main grooves (2A);
a land (3B) portion extending in the tire circumferential direction being formed in each of shoulder regions located outwardly of the two outer main grooves (2A);
wherein the following relationships are fulfilled when the tread surface contacts with a ground:

$$0.80 \leq B/A \leq 0.95$$

$$0.90 \leq C/B \leq 1.00$$

where A is the ground contact length of the central land portion (3A1) of the three land portions in the center region, B is the ground contact length of the outer edge of the land portion (3B) in the shoulder region, and C is the ground contact length of the inner edge of the land portion (3B) in the shoulder region;
a ground contact length D of the outer edge of each of the land portions (3A2) on both sides of the central land portion (3A1) in the center region is equal to or shorter than a ground contact length E of the inner edge thereof; and the ground contact length E of the inner edge of each of the land portions (3A2) on both sides in the center region is equal to or less than the ground contact length A of the central land portion (3A1), and is equal to or greater than the ground contact length B of the outer edge of the land portion (3B) in the shoulder region.

2. A pneumatic tire according to claim 1, wherein the ground contact length D of the outer edge of each of the land portions (3A2) on both sides in the center region is equal to or greater than the ground contact length C of the inner edge of the land portion (3B) in the shoulder region.

3. A pneumatic tire according to any one of claims 1 or 2, wherein the four main grooves (2) are symmetrically disposed with respect to the tire equatorial plane.

4. A pneumatic tire according to any one of claims 1 to 3, wherein the four main grooves (2) extend straight in the tire circumferential direction.

5. A pneumatic tire according to any one of claims 1 to 4, wherein the pneumatic tire is a heavy duty pneumatic tire.

**Patentansprüche**

1. Pneumatischer Reifen, der eine Laufoberfläche aufweist, die vier Hauptnuten (2) umfasst, die sich in der Umfangsrichtung des Reifens erstrecken, wobei die vier Hauptnuten (2) aus zwei inneren Hauptnuten (2B), die auf beiden Seiten einer äquatorialen Ebene des Reifens angeordnet sind, und zwei äußeren Hauptnuten (2A) bestehen, die außerhalb der zwei inneren Hauptnuten (2B) angeordnet sind;
wobei drei Bodenabschnitte (3A1, 3A2), die sich in der Umfangsrichtung des Reifens erstrecken, in einem Mittelbereich, der zwischen den zwei äußeren Hauptnuten (2A) angeordnet ist, ausgebildet sind;
wobei ein Bodenabschnitt (3B), der sich in der Umfangsrichtung des Reifens erstreckt, in jedem der Schulterbereiche, die außerhalb der zwei äußeren Hauptnuten (2A) angeordnet sind, ausgebildet ist;
bei dem die folgende Beziehungen erfüllt werden, wenn die Laufoberfläche mit einem Boden in Kontakt steht;

$$0,80 \leq B/A \leq 0,95$$

$$0,90 \leq C/B \leq 1,00$$

wobei A die Bodenkontaktlänge des mittleren Bodenabschnitts (3A1) der drei Bodenabschnitte in dem Mittelbereich ist, B die Bodenkontaktlänge der äußeren Kante des Bodenabschnitts (3B) in dem Schulterbereich ist und C die Bodenkontaktlänge der inneren Kante des Bodenabschnitts (3B) in dem Schulterbereich ist;
wobei eine Bodenkontaktlänge D der äußeren Kante von jedem der Bodenabschnitte (3A2) auf beiden Seite des mittleren Bodenabschnitts (3A1) in dem Mittelbereich gleich oder kleiner als eine Bodenkontaktlänge E der inneren Kante davon ist; und

die Bodenkontaktlänge E der inneren Kante von jedem der Bodenabschnitte (3A2) auf beiden Seiten in dem Mittelbereich gleich oder kleiner als die Bodenkontaktlänge A des mittleren Bodenabschnitts (3A1) ist und gleich oder größer als die Bodenkontaktlänge B der äußeren Kante des Bodenabschnitts (3B) in dem Schulterbereich ist.

2. Pneumatischer Reifen nach Anspruch 1, bei dem die Bodenkontaktlänge D der äußeren Kante von jedem der Bodenabschnitte (3A2) auf beiden Seiten in dem Mittelbereich gleich oder größer als die Bodenkontaktlänge C der inneren Kante des Bodenabschnitts (3B) in dem Schulterbereich ist.

3. Pneumatischer Reifen nach einem der Ansprüche 1 oder 2, bei dem die vier Hauptnuten (2) bezüglich der äquatorialen Ebene des Reifens symmetrisch angeordnet sind.

4. Pneumatischer Reifen nach einem der Ansprüche 1 bis 3, bei dem sich die vier Hauptnuten (2) in der Reifenumfangsrichtung gerade erstrecken.

5. Pneumatischer Reifen nach einem der Ansprüche 1 bis 4, bei dem der pneumatische Reifen ein hochbelastbarer pneumatischer Reifen ist.

**Revendications**

1. Bandage pneumatique comportant une surface de bande de roulement comprenant quatre rainures principales (2) s'étendant dans une direction circonférentielle du bandage, les quatre rainures principales (2) consistant en deux rainures principales intérieures (2B) disposées sur les deux côtés d'un plan équatorial du bandage et deux rainures principales extérieures (2A) disposées à l'extérieur des deux rainures principales intérieures (2B);

trois portions de portée (3A1, 3A2) s'étendant dans la direction circonférentielle du bandage étant formées dans une région centrale située entre les deux rainures principales extérieures (2A);

une portion de portée (3B) s'étendant dans la direction circonférentielle du bandage étant formée dans chacune de régions d'épaulement situées à l'extérieur des deux rainures principales extérieures (2A);

où les relations suivantes sont satisfaites lorsque la surface de bande de roulement vient en contact avec un sol:

$$0,80 \leq B/A \leq 0,95$$

$$0,90 \leq C/B \leq 1,00$$

où A est la longueur en contact avec le sol de la portion de portée centrale (3A1) des trois portions de portée dans la région centrale, B est la longueur en contact avec le sol du bord extérieur de la portion de portée (3B) dans la région d'épaulement, et C est la longueur en contact avec le sol du bord intérieur de la portion de portée (3B) dans la région d'épaulement;

une longueur D en contact avec le sol du bord extérieur de chacune des portions de portée (3A2) sur les deux côtés de la portion de portée centrale (3A1) dans la région centrale est égale ou inférieure à une longueur E en contact avec le sol de son bord intérieur; et

la longueur E en contact avec le sol du bord intérieur de chacune des portions de portée (3A2) sur les deux côtés dans la région centrale est égale ou inférieure à la longueur A en contact avec le sol de la portion de portée centrale (3A1) et est égale ou supérieure à la longueur B en contact avec le sol du bord extérieur de la portion de portée (3B) dans la région d'épaulement.

2. Bandage pneumatique selon la revendication 1, où la longueur D en contact avec le sol du bord extérieur de chacune des portions de portée (3A2) sur les deux côtés dans la région centrale est égale ou supérieure à la longueur C en contact avec le sol du bord intérieur de la portion de portée (3B) dans la région d'épaulement.

3. Bandage pneumatique selon l'une quelconque des revendications 1 ou 2, où les quatre rainures principales (2) sont disposées d'une manière symétrique par rapport au plan équatorial du bandage.

**4.** Bandage pneumatique selon l'une quelconque des revendications 1 à 3, où les quatre rainures principales (2) s'étendent d'une manière rectiligne dans la direction circonférentielle du bandage.

**5.** Bandage pneumatique selon l'une quelconque des revendications 1 à 4, où le bandage pneumatique est un bandage pneumatique pour conditions de service extrêmes.

# Fig.1

# Fig.2

# Fig.3

# Fig.4

Fig.5

Fig.6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 03035413 A

- JP 8085308 A